# EUROPEAN PATENT APPLICATION

(11) **EP 4 131 726 A1**
(43) Date of publication of application: **08.02.2023**
(21) Application number: 21805166.2
(22) Date of filing: 10.05.2021
(51) Int. Cl.: H02J 50/80, H02J 50/10, H02J 50/30, G01S 17/894, G01S 17/06, G01S 7/481, H02K 11/00, H02K 7/08, H02K 7/00, H02K 29/00

(54) **CONTACTLESS POWER SUPPLY AND DATA COMMUNICATION APPARATUS AND ROTATIONALLY DRIVEN LIDAR SYSTEM USING SAME**

(30) Priority: 11.05.2020 KR 20200055950; 26.02.2021 KR 20210026220
(71) Applicant: Lidro, Geumcheon-gu Seoul 08504 (KR)
(72) Inventor: MOON, Myung Il, Incheon 21331 (KR)
(74) Representative: BCKIP Part mbB
(86) International application number: PCT/KR2021/005793
(87) International publication number: WO 2021/230587

(57) **Abstract**

The present invention is intended to provide a contactless power supply and data communication apparatus comprising: a main shaft configured to connect and fix an upper combination body from the center while being supported by a lower combination body; a motor configured to provide rotation power for rotating a rotary part centering around the main shaft; a wireless power part consisting of a transmission part core united with and fixed to an outer circumferential surface of the main shaft, and a reception part core spaced apart from the transmission part core, and rotating from an upper end, thereby supplying and receiving power through electromagnetic induction; and an optical communication part configured to transmit and receive an optical signal by being configured in such a manner that a rotary communication element disposed on a lower surface of a rotary substrate rotating with the main shaft as its center, and a fixed communication element disposed on an upper surface of a fixed substrate which is fixed are spaced apart from each other at a fixed distance, and is also intended to provide a rotary drive light detection and ranging (LiDAR) system to which the contactless power supply and data communication apparatus is applied.

## Description

### Technical Field

The present invention relates to a contactless power supply and data communication apparatus, and, more particularly, to a contactless power supply and data communication apparatus that supplies power of a fixed part to a rotary part using a contactless method, provides mechanical devices intended for transmitting and receiving optical communication-based data between the rotary part and the fixed part, and is applicable to a light detection and ranging (LiDAR) system configured to obtain a three-dimensional image by a combination of these devices, and to a rotary drive LiDAR system using the contactless power supply and data communication apparatus.

### Background Art

In general, a power transmission apparatus in which a contact circuit is adopted has been adopted in a power supply system of a motor or an electromotor, and so on. Although it is advantageous in that the contact power transmission apparatus is relatively simple and low in price, since the contact power transmission apparatus is connected by wire, it is not easy to use it in a mechanical apparatus comprising a rotary structure, or a rotary drive unit.

In order to solve this, in a different conventional art, a slip ring, which is called a rotary joint, a rotary connector, and so on, and is an electric and mechanical component, has commonly been used. With respect to the slip ring, which is an apparatus used for supplying power or an electric signal to a rotating object, in case that an apparatus operating by being permitted to receive power is furnished in the inside of the rotating object, since a twist occurs from an electric wire used for connecting it, it becomes impossible to carry out a rotation movement, so by solving this, the slip ring functions as a kind of rotation-type connector capable of transmitting power without a twist of the electric wire.

However, the contactless power transmission apparatus, like the slip ring, has mainly been used for the purpose of supplying power simply, and a low-price slip ring in a graphite type has mainly been used. However, the graphite-type slip ring is problematic in that fault, difficulty in maintenance, and an increase in the kind of minute signals occur, and it is disadvantageous in that a complex structure, a high expense, and matters required for high technology are required.

In the conventional art related with this, Korean Patent Registration No. 10-1671352 (October 26, 2016), a triaxial slip ring having an optical signal transmission means has widely been known. This conventional art discloses a triaxial contactless slip ring motor in which a pressure transmission part configured to transmit pressure so as to cause the pressure, power, and an optical signal to be supplied to one slip ring, a power transmission part configured to transmit the power, and an optical signal transmission part configured to transmit the optical signal are formed into one constitution.

However, the contactless slip ring motor of the conventional art has a complex structure of comprising a rotator part, a circuit board part, a connector part, and a slip ring unit, and is configured in such a manner as to transmit the optical signal through an optical cable in a through hole rather than providing wireless optical communication. Accordingly, in the conventional art, since the through hole intended for transmitting the optical signal should be furnished, it is problematic in that there is difficulty in manufacturing, and it is not easy to secure durability, reliability, and reproducibility.

### Detailed Description of the Invention

### Technical Problem

The present invention has been devised for solving the problems of the conventional art as described above, and an object of the present invention is to provide a contactless power supply and data communication apparatus which is configured in such a manner as to carry out the combination of a rotary part centering around a fixed shaft which is a main shaft, thereby providing an electromagnetic induction means and light-based data communication circumstances in order to stably supply power using a non-contact power supply method while clearing up vibration in rotary unit devices.

Furthermore, another object of the present invention is to provide, with respect to the transmission and reception of optical communication modules mounted to a rotary substrate and a fixed substrate, a structure which enables mutual communication to be performed without relations with the positions of transmission and reception elements because a light diffusion plate is configured between the rotary substrate and the fixed substrate.

Furthermore, the other object of the present invention is to provide a rotary drive light detection and ranging (LiDAR) system which supplies power to laser transmission and reception modules mounted to a rotary part using a non-contact power supply method through a contactless power supply and data communication apparatus, thereby causing them to operate, and which transmits and receives a signal or data through an optical communication module.

### Solution for Solving the Problem

According to one aspect of the present invention for solving the aforesaid technical problems, a contactless power supply and data communication apparatus may comprise: a main body housing consisting of an upper combination body, and a lower combination body; a main shaft configured to connect and fix the upper combination body from the center while being supported by the lower combination body; a motor configured to provide rotation power for rotating a rotary part centering around the main shaft; a wireless power part consisting of a transmission part core united with and fixed to an outer circumferential surface of the main shaft, and a reception part core spaced apart from the transmission part core, and rotating from an upper end, thereby supplying and receiving power through electromagnetic induction; and an optical communication part configured to transmit and receive an optical signal by being configured in such a manner that a rotary communication element disposed on a lower surface of a rotary substrate rotating with the main shaft as its center, and a fixed communication element disposed on an upper surface of a fixed substrate which is fixed are spaced apart from each other at a fixed distance.

Furthermore, the main shaft according to the present invention may form a through hole which makes a path having a fixed radius by being pieced by a central portion in order to connect a signal and a power connection line, which come in from a control substrate, to the inside.

Furthermore, the motor according to the present invention may be an outer rotor-type brushless direct current (BLDC) motor in which a motor fixation part functioning as a stator is located centering around the main shaft, and a motor rotation part functioning as a rotor is located at an outer side of the motor fixation part.

Furthermore, the transmission part core and the reception part core of the wireless power part according to the present invention may have a structure in which they are symmetrical with respect to each other, and may comprise a transmission part coil and a reception part coil, respectively formed in a coil form in which a fixed quantity of coil is wound from an internal space, and the transmission part coil may be connected to the power connection line coming in through the through hole of the main shaft.

Furthermore, the reception part core of the wireless power part, and the rotary substrate of the optical communication part according to the present invention may be combined with a rotation support member configured to transmit rotary force of the motor rotation part.

Furthermore, the rotation support member may rotate while coming into contact with bearings furnished on at least one or more portions along an outer circumferential surface of the main shaft.

Furthermore, the optical communication part according to the present invention may further have a light diffusion plate in a round shape that consists of a light diffusion member in a round shape between the fixed substrate and the rotary substrate, and functions to uniformly propagate light transmitted and received from a luminous source through dispersion and diffusion actions.

Furthermore, the rotary communication element according to the present invention may comprise a plurality of visible light transmission modules each consisting of a visible light diode, and one infrared (IR) reception module consisting of an infrared (IR) reception sensor, and the fixed communication element may comprise at least one or more infrared (IR) transmission modules each consisting of an infrared laser diode (LD), and one visible light reception module consisting of a visible light reception sensor.

Furthermore, the light diffusion plate may further comprise an optical waveguide configured to transmit an optical signal between the rotary communication element and the fixed communication element.

According to the other aspect of the present invention for solving the aforesaid technical problems, with respect to a rotary drive light detection and ranging (LiDAR) system having a contactless power supply and data communication apparatus, the system may comprise: a main body housing consisting of an upper combination body, and a lower combination body; a main shaft configured to connect and fix the upper combination body from the center while being supported by the lower combination body; a motor configured to provide rotation power for rotating a rotary part centering around the main shaft; a wireless power part consisting of a transmission part core united with and fixed to an outer circumferential surface of the main shaft, and a reception part core spaced apart from the transmission part core, and rotating from an upper end, thereby supplying and receiving power through electromagnetic induction; and an optical communication part configured to transmit and receive an optical signal by being configured in such a manner that a rotary communication element disposed on a lower surface of a rotary substrate rotating with the main shaft as its center, and a fixed communication element disposed on an upper surface of a fixed substrate which is fixed are spaced apart from each other at a fixed distance; and a laser transmission and reception module consisting of a laser transmission unit configured to radiate a laser beam while rotating centering around the main shaft by receiving rotation power of the motor, and laser reception units configured to receive the laser beam returned by being reflected in a target, wherein the laser transmission and reception module may be circuit-connected to a reception part coil of the wireless power part, thereby carrying out laser transmission and reception operations by receiving power induced to the reception part coil, and catching hold of a distance between objects, and a shape by transmitting and receiving a signal or data through the optical communication part.

### Effect of the Invention

Since the aforesaid contactless power supply and data communication apparatus causes an operation to be realized in a simple constitution by supplying power from the fixed part to the rotary part which rotates, and also causes the optical communication module to transmit and receive a signal or data between the fixed part and the rotary part, it is advantageous in that its modifications can effectively be applied to various applied apparatuses or systems.

Furthermore, the present invention is effective to clear up the vibration of rotary unit devices because it is configured in such a manner that a combination of the rotary part is carried out centering around a fixed shaft which is the main shaft.

Furthermore, according to the present invention, with respect to transmission and reception of the optical communication module, since the light diffusion plate is configured between the rotary substrate and the fixed substrate, it is effective to enhance the efficiency of communication while enabling mutual communication to be performed without relations with the positions of transmission and reception elements.

Furthermore, since the optical communication part according to the present invention is embodied in such a manner as to apply an infrared (IR) or visible light wavelength area selectively or comprehensively rather than carrying out communication in both directions using only an infrared light, it is advantageous in that communication can be prevented from being crossed due to different wavelength bands from each other, and that effective optical communication in both directions can be performed.

### Brief Description of the Drawings

FIG. 1 is a schematic front view concerning a contactless power supply and data communication apparatus according to one exemplary embodiment of the present invention.
FIG. 2 is an exemplary view showing the enlargement of a wireless power part of the contactless power supply and data communication apparatus shown in FIG. 1.
FIG. 3 is an exemplary view showing the enlargement of an optical communication part of the contactless power supply and data communication apparatus shown in FIG. 1.
FIG. 4 is an exemplary view showing a visible light transmission module of the optical communication part shown in FIG. 3 according to one exemplary embodiment of the present invention, and a visible light reception module corresponding thereto.
FIG. 5 is an exemplary view showing an infrared (IR) transmission module of the optical communication part shown in FIG. 3 according to one exemplary embodiment of the present invention, and an infrared (IR) reception module corresponding to the IR transmission module.
FIG. 6 is a front view concerning a main constituent part of a rotary drive light detection and ranging (LiDAR) system in which the contactless power supply and data communication apparatus according to one exemplary embodiment of the present invention is adopted.
FIG. 7 is an exemplary view showing a combination structure of the rotary drive LiDAR system configured on the basis of FIG. 6.
FIG. 8 is an exemplary view showing the inside of the rotary drive LiDAR system combined on the basis of FIG. 6.
FIG. 9 is a perspective view of an external appearance showing an operation state of the system as shown in FIG. 8 according to the present invention.

### Mode for Carrying Out the Invention

The terms or words used in the present description and claims should not be construed as being limited to meanings defined in a dictionary, but should be construed as having meanings and concepts which are coincident with the technical ideas of the present invention on the basis of the principle that the inventor can appropriately define concepts of the terms for describing his invention in the best mode.

Accordingly, since the exemplary embodiments described in the present description, and the constitutions illustrated in the drawings are only the best preferable examples, and are not intended to represent all the technical ideas of the present invention, it should be understood that there could be various equivalents and modification examples which could be substituted for them at the time of the filing of the present application.

Hereinafter, the preferable exemplary embodiments of the present invention are described in detail with reference to the accompanying drawings as follows.

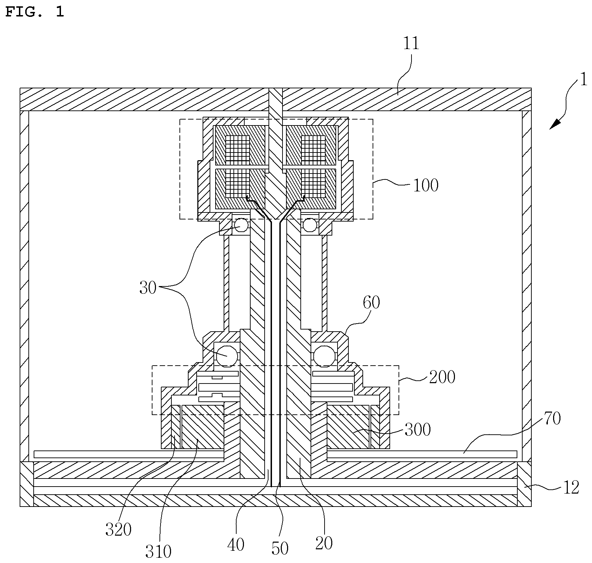

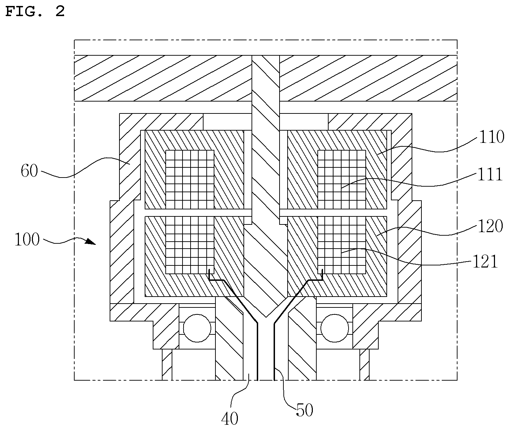

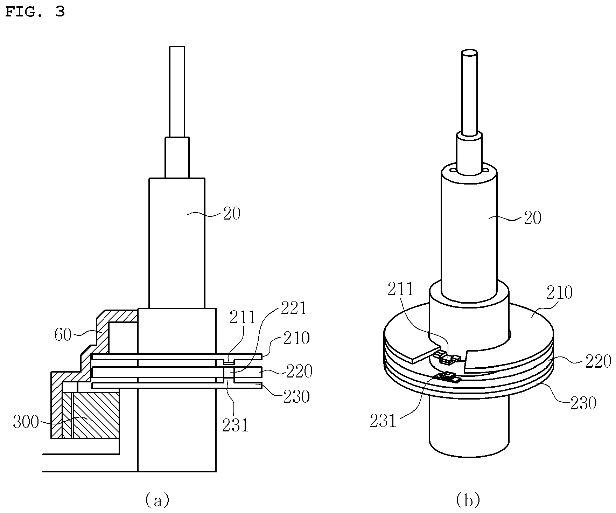

FIG. 1 is a schematic front view concerning a contactless power supply and data communication apparatus according to one exemplary embodiment of the present invention, FIG. 2 is an exemplary view showing the enlargement of a wireless power part of the contactless power supply and data communication apparatus shown in FIG. 1, and FIG. 3 is an exemplary view showing the enlargement of an optical communication part of the contactless power supply and data communication apparatus shown in FIG. 1.

As shown in FIG. 1 to FIG. 3, the contactless power supply and data communication apparatus 1 of the present invention is divided into a rotary part configured to operate while rotating through a driving motor from the inside of a housing, and a fixed part configured to operate in a state of being fixed for supplying power to the rotary part and controlling this. In addition, the contactless power supply and data communication apparatus may have an electronic apparatus and a mechanical instrument part combined with the rotary part and the fixed part, respectively.

Thus, in the present description, the rotary part may correspond to a rotary body or a rotary unit which may be regarded as the same terms, and the fixed part may correspond to a fixture or a fixed unit which may be regarded as the same terms.

The fixed part is supported and connected by a main shaft 20 configured to perpendicularly connect an upper combination body 11 and a lower combination body 12 of a main body of the housing 10 from the center. At this time, the upper combination body 11 and the lower combination body 12 may correspond to an upper end cover and a lower end cover of the contactless power supply and data communication apparatus 1, respectively.

That is, the main shaft 20, which is a fixed shaft mounted and supported to a central portion of the lower combination body 12, and connected into the center of the upper combination body 11, may have a structure in which a central axis of a motor 300 extends so that an outer circumferential rotation of the motor can be maintained.

Also, the main shaft 20 forms a through hole 40 which makes a hollow having a fixed radius by its central portion being pierced so that a signal and a power connection line 50 coming in from a control substrate 70 can be connected to the inside. That is, the through hole 40 may be an internal path which causes the power connection line 50 intended for supplying power supplied from the control substrate 70 of the lower combination body 12, and a signal line 50 intended for transmitting and receiving data via an optical communication part 200 to come into the inside.

Thus, the contactless power supply and data communication apparatus of the present invention has a structure in which the motor 300 configured to supply rotation power for rotating the rotary part with the main shaft 20 as a central axis is disposed at an upper portion of the control substrate 70, the rotary part rotating owing to the rotation power of the motor 300 is located to rotate through bearings 30 located along an outer circumstantial surface of the main shaft 20, the optical communication part 200 configured to transmit and receive an optical signal is located at an upper side of the driving motor 300, and a wireless power part 100 configured to supply power to the rotary part while receiving the power from the power connection line 50 is located at the uppermost side with the main shaft 20 as an axis, so they can be combined.

The control substrate 70 of the present invention may have a data processing means configured to receive external power by being combined with the lower combination body 12 located at a lower end of the contactless power supply and data communication apparatus, to generate a control signal intended for controlling a rotary speed of the motor 300, or controlling the electronic apparatus of the rotary part, and to process data generated from the rotary part by receiving the data through the optical communication part 200.

That is, the control substrate 70 may comprise at least any one selected from a logical circuit, a programing logic controller, a micro-computer, a microprocessor, and so on, and may be embodied in such a manner as to mount a communication module capable of transmitting a signal or data by communicating with an external apparatus through the Intranet, the Internet, a car network, and so on.

Thus, the control substrate 70 may have a power connector to which external power is applied, and a communication connector to be connected to an external network, and according to some embodiments, the control substrate may selectively or additionally have an integrated connector used for both a power source and communication.

The driving motor 300 according to the present invention is an outer rotor-type brushless direct current (BLDC) motor consisting of a motor fixation part 310 in which a stator is formed at an outer ring centering around the main shaft 20, and a motor rotation part 320 in which a rotor corresponding to a part which causes rotary force is formed at an outer side of the motor fixation part 310. That is, it may be found that the present invention is formed to embody the apparatus in which the rotary part rotates due to rotary force of the outer circumferential surface of the motor by applying the structure of the outer rotor-type motor.

Furthermore, a rotary substrate 210 of the optical communication part 200 consisting of the rotary part, a reception part core 110 configured to receive electric power of the wireless power part 100, and a rotary unit mounted for the function of a specific purpose may be combined with a rotation support member 60 configured to receive rotary force. Thus, the rotation support member 60 may be united with a motor rotation part 320, and may have a structure that makes the rotary force of the motor transmitted to a constituent unit of the rotary part.

Furthermore, the rotation support member 60 is configured to rotate while coming into contact with the bearings 30 furnished on at least one or more portions along the outer circumferential surface of the main shaft 20 so as to rotate smoothly by a reduction in friction caused by a rotation, and a decrease in a loss of energy, or a decrease in generation of heat.

The wireless power part 100 consists of: a transmission part core 120 configured to be united with the outer circumferential surface of the main shaft 20 as shown in FIG. 2; and a reception part core 110 spaced apart from the transmission part core 120, and united by the rotation support member 60 from an upper end, thereby receiving power transmitted in a contactless method from the transmission part core 130 while rotating around the outer circumferential surface of the main shaft 20, and supplying the power to a rotary unit, like a laser transmission and reception module.

The reception part core 110 and the transmission part core 120 have a structure in which they are symmetrical with each other, and comprise a reception part coil 111 and a transmission part coil 121, respectively, which are formed in a coil shape in which a fixed quantity of coil is wound.

That is, the reception part core 110 and the transmission part core 120, which are coil frames supporting the reception part coil 111 and the transmission part coil 121 which are inserted into each inside space, may be a ferrite core of an ferromagnetic element used in a core of a transformer or an inductor using the properties of high permeability and low conductivity, and the transmission part coil 121 and the reception part coil 111 disposed to be spaced apart from each other may be called a transmission coil and a reception coil which show that a coil is wound at a fixed coil diameter and in the fixed number of turn.

At this time, the transmission part coil 121 is connected to the power connection line 50 coming in through the through hole 40, thereby functioning to form an electromagnetic field by receiving power transmitted from the control substrate 70 in a state of being fixed. Accordingly, induced electromotive force generated through electromagnetic induction by the electromagnetic field of the transmission part coil 121 may cause the power to be induced to the reception part coil 111, which rotates, through a non-contact power supply method.

The induced power is supplied to the rotary unit connected and mounted to a power input terminal intended for transmitting the power to the reception part coil 111. Accordingly, the rotary unit driving in the rotary part may operate while receiving the power resulting from electromagnetic induction through the reception part coil 111.

Thus, according to the present invention, a specific drive unit, like the laser transmission and reception module 400 configured to radiate a laser beam to the rotary part or receive a laser beam from the rotary part, is connected, thereby operating owing to power supplied in a non-contact method.

In general, since according to expansion in a quantity of the coil wound on each of the transmission part coil 121 and the reception part coil 111, and a separated distance between the reception part core 110 and the transmission part core 120, the quantity of electromagnetic induction and the quantity of wireless transmission energy may be determined, if the quantity of the coil increases, or the separated distance reduces, a transmission ratio of power will be able to increase, yield will be able to be improved.

FIG. 3 is an exemplary view for showing a structure of the optical communication part 200, wherein (A) shown in FIG. 3 is an exemplary view showing a state in which the optical communication part 200 is united with the rotation support member 60 extending to an outer circumferential surface of the motor rotation part 320, and (B) shown in FIG. 3 is a perspective view showing the optical communication part united with the main shaft 20.

Thus, the optical communication part 200 according to the present invention is configured to cause the fixed substrate 230 located at a lower portion and the rotary substrate 210 located at an upper portion, which are spaced apart from each other at a fixed distance as illustrated, to correspond to each other in a pair.

The optical communication part 200 has a rotary communication element 211 located at a lower surface of the rotary substrate 210 and configured to communicate downward, and a fixed communication element 231 located at an upper surface of the fixed substrate 230 and configured to communicate upward. Furthermore, the optical communication part further has a light diffusion plate 220 configured to improve communication efficiency using the diffusion of light in a space between the fixed substrate 230 and the rotary substrate 210.

The rotary substrate 210 may be a printed circuit board (PCB) in a round shape which rotates by being united by the rotation support member 60, and at this time, the rotary communication element 211 disposed on the lower surface of the rotary substrate 210 may comprise a plurality number of visible light transmission modules 212 each consisting of a visible light diode (a light-emitting diode) in order to transmit a large amount of data signals occurring from the rotary unit, like the laser transmission and reception module, and one infrared (IR) reception module 213 consisting of an infrared (IR) reception sensor (an IR sensor).

Furthermore, the fixed substrate 230 may be a printed circuit board fixed along the circumference of the main shaft 20 so as to correspond to the rotary substrate 210 by being combined with an upper side of the motor fixation part 310 through a bolt, a nut, or other coupling means. At this time, the fixed communication element 231 located at the upper surface of the fixed substrate 230 may comprise at least one or more IR transmission modules 232 each consisting of an infrared laser diode (LD), and one visible light reception module 233 consisting of a visible light reception sensor intended for receiving a control signal transmitted from the fixed substrate 230.

At this time, it is preferable that the visible light transmission modules 212 and the IR transmission modules 232 are composed of at least three or more modules, respectively.

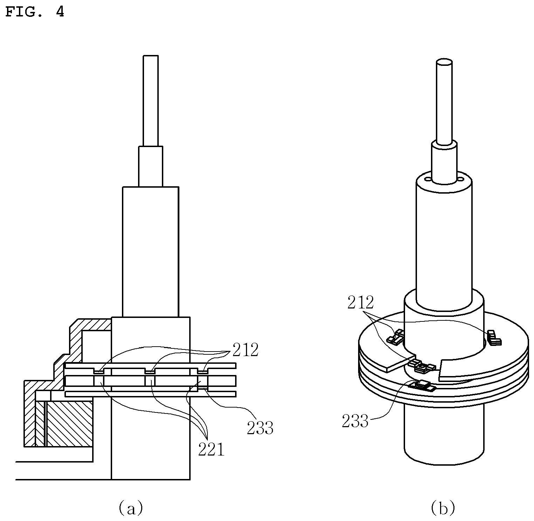

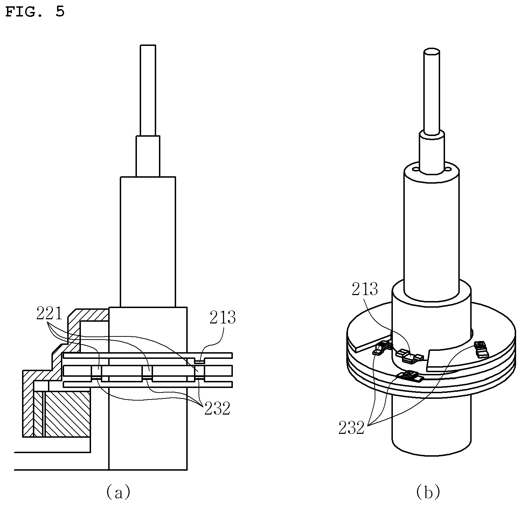

Accordingly, FIG. 4 is an exemplary view showing, from the optical communication part 200 shown in FIG. 3 according to one exemplary embodiment of the present invention, three visible light transmission modules 212, and the visible light reception module 233 of the fixed substrate 230 corresponding thereto, and FIG. 5 is an exemplary view showing, from the optical communication part 200 shown in FIG. 3, an arrangement of the IR reception module 213 of the rotary substrate 210 corresponding to three IR transmission modules 232 disposed at the fixed substrate 230.

That is, as shown in FIG. 4 and FIG. 5, the visible light transmission modules 212 functioning as the rotary communication element 211, and the IR transmission modules 232 functioning as the fixed communication element 231 may be furnished in such a manner that three modules are disposed on each of the rotary substrate 210 and the fixed substrate 230 at the same intervals which make the angle of 120 degrees.

Accordingly, the optical communication part 200 of the present invention has a structure in which in order to effectively transmit a great quantity of data signals generated from the rotary unit, three visible light transmission modules 212 of the rotary substrate 210 operate simultaneously so as to transmit a great quantity of data simultaneously so that the visible light reception module 233 of the fixed substrate 230 can receive the data, and on the contrary, a transmitted control signal mainly aimed at a command for controlling the rotary unit through the control substrate 70 is transmitted by three IR transmission modules 232 so as to be received by the IR reception module 213 of the rotary substrate 210.

Furthermore, with respect to the light diffusion plate 220, which is furnished to be fixed at a space between the fixed substrate 230 and the rotary substrate 210, when the rotary substrate 210 located at the upper side rotates, positions of the light transmission and reception elements of both sides become in discord with each other, so it may be impossible to carry light transmission and reception, and in order to solve this problem, the light diffusion plate functions to uniformly propagate the light of a point light source or a linear light source through dispersion and diffusion actions. Thus, the light diffusion plate 220 may be a light diffusion member in a film form or a sheet form which may cause the light to be diffracted or diffused so that the light can change into a surface light source without hot spots.

In addition to that, the light diffusion plate 220 may further comprise an optical waveguide 221. Like this, in case that the optical waveguide 221 is further included in the light diffusion plate 220, it may get easier to transmit an optical signal between the rotary communication element 211 and the fixed communication element 231.

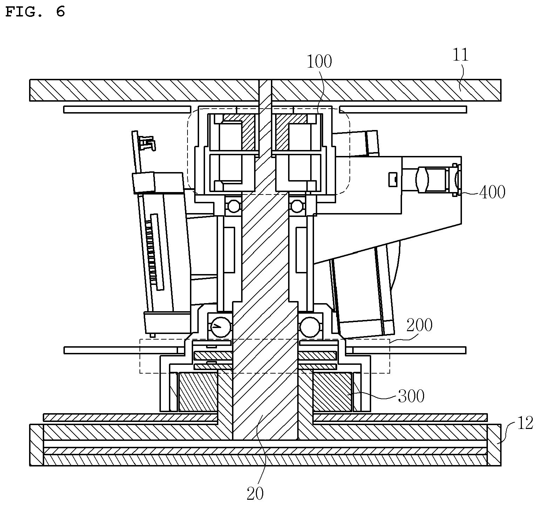

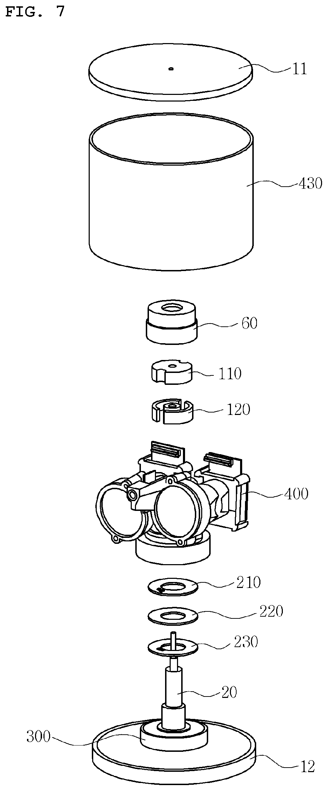

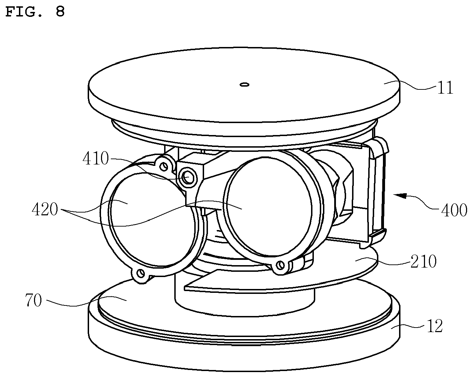

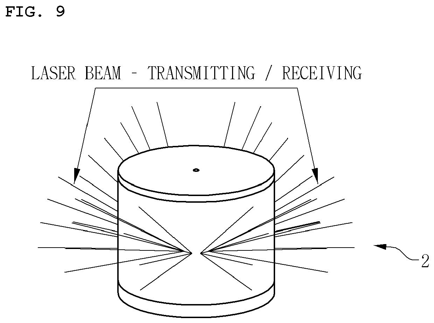

FIG. 6 is a front view concerning a main constituent part of a rotary drive LiDAR system according to another exemplary embodiment of the present invention in which the contactless power supply and data communication apparatus is adopted, FIG. 7 is an exemplary view showing a combination structure of the rotary drive LiDAR system configured on the basis FIG. 6, and FIG. 8 is an exemplary view showing the inside of the rotary drive LiDAR system combined on the basis of FIG. 6. Also, FIG. 9 is a perspective view of an external appearance showing an operation state of the system as shown in FIG. 8 according to the present invention.

As shown in FIG. 6, according to the present invention, a light detection and ranging (LiDAR) system 2 may be configured to rotate and drive in such a manner as to combine at least one or more laser transmission and reception modules 400 with the rotary part of the contactless power supply and data communication apparatus 1 described previously.

As illustrated, the rotary drive LiDAR system 2 in which the contactless power supply and data communication apparatus 1 of the present invention is adopted may be formed in a shape of having a cylindrical main body housing composed by upper and lower combinations of the upper combination body 11 and the lower combination body 12. The upper combination body 11 and the lower combination body 12 may serve as upper and lower cases of the LiDAR system 2.

Furthermore, the rotary drive LiDAR system 2 may be protected by an outside case 430 functioning as a laser transmission window composed of a material having a light transmission property so that a laser beam caused by the laser transmission and reception modules 400 which rotate can be radiated to the outside, and the laser beam returned by being reflected in an external object and so on can easily be received.

Furthermore, the upper combination body 11 may further have a heat-radiating plate in a heat sink shape with a heat-radiating structure showing excellent heat conductivity so that heat occurring from an inner side of the LiDAR system 2 can easily be radiated to the outside.

Thus, the laser transmission and reception modules 400 are located at the rotary substrate 210 of the optical communication part 200, and are combined with the main shaft 20 as the central axis.

Thus, the laser transmission and reception module 400 is circuit-connected to the reception part coil 111 of the wireless power part 100 so that laser transmission and reception operations can be performed by power induced to the reception part coil 111, and the laser transmission and reception module operates in a state of a rotation speed being controlled according to control of the rotation speed of the motor 300.

Thus, the laser transmission and reception module 400 according to the present exemplary embodiment may consist of a laser transmission unit configured to radiate a laser beam according to a rotating movement, and laser reception units corresponding thereto and configured to receive the laser beam returned by being reflected in a target. Although it is illustrated that the laser transmission and reception module 400 of the present invention is configured in such a manner as to dispose the laser transmission unit shown as a laser transmission lens 410 in the center, and is composed of the laser reception units consisting of laser reception lenses 420 furnished in a pair, the detailed constitution concerning the laser transmission and reception module may variously be applied.

Furthermore, the LiDAR system 2 using the contactless power supply and data communication apparatus according to the present exemplary embodiment may transmit and receive an optical signal in a pair of directions without an obstacle through the rotary communication element 211 located at the lower surface of the rotary substrate 210, and the fixed communication element 231 located at the upper surface of the fixed substrate 230, and this system may perform signal and data processing through the control means of the control substrate 70 with respect to the image signal and data of the laser transmission and reception module 400 received by the fixed communication element 231. This means catching hold of a distance between objects, and a shape through signal processing of the control substrate with respect to the optical signal received by the laser beam radiated from the laser transmission and reception module being reflected in a target.

Furthermore, as the rotary drive LiDAR system 2 according to the present exemplary embodiment supplies power using a non-contact method to the laser transmission and reception module 400 combined with the rotary part through the wireless power part 100, an effective operation may be carried out even when the laser transmission and reception module 400 rotates.

As reviewed above, the rotary drive LiDAR system 2 according to the present exemplary embodiment may be a system configured by applying the aforesaid contactless power supply and data communication apparatus 1 to a LiDAR optical apparatus which enables the laser transmission and reception module rotating owing to the motor to transmit and receive a laser beam while rotating at the angle of 360 degrees.

Furthermore, based on the aforesaid exemplary embodiment of the LiDAR system, it can be confirmed that the contactless power supply and data communication apparatus 1 of the present invention may be applied to a laser distance measurement instrument or the LiDAR apparatus, and it is obvious that modifications of the contactless power supply and data communication apparatus may effectively be applied to various systems in which the rotary drive unit connected to the rotary part operates, and other apparatuses, applied apparatuses, or systems having various structures. That is, it is to be obvious that the contactless power supply and data communication apparatus of the present invention may be applied to robots, ships, helicopters, drones and so on with respect to the function of contactless power supply and data communication thereof, and may also be applied to fixed apparatuses limited in movement, like buildings, pillars, towers, and so on, without any limit.

As previously described, although in the detailed description of the invention, having been described the preferable exemplary embodiments of the invention, it is to be understood that various modifications and alternations of the present invention can be made by those having ordinary skill in the technical field to which the present invention pertains without deviating from the spirit and the scope of the present invention described in the appended claims.

## Claims

1. A contactless power supply and data communication apparatus, comprising:
a main body housing consisting of an upper combination body, and a lower combination body;
a main shaft configured to connect and fix the upper combination body from the center while being supported by the lower combination body;
a motor configured to provide rotation power for rotating a rotary part centering around the main shaft;
a wireless power part consisting of a transmission part core united with and fixed to an outer circumferential surface of the main shaft, and a reception part core spaced apart from the transmission part core, and configured to rotate from an upper end, thereby supplying and receiving power through electromagnetic induction; and
an optical communication part configured to transmit and receives an optical signal by being configured in such a manner that a rotary communication element disposed on a lower surface of a rotary substrate rotating with the main shaft as its center, and a fixed communication element disposed on an upper surface of a fixed substrate which is fixed are spaced apart from each other at a fixed distance.

2. The apparatus of claim 1, wherein the main shaft forms a through hole which makes a path having a fixed radius by being pieced by a central portion in order to connect a signal and a power connection line, which come in from a control substrate, to the inside.

3. The apparatus of claim 1, wherein the motor is an outer rotor-type brushless direct current (BLDC) motor in which a motor fixation part functioning as a stator is located centering around the main shaft, and a motor rotation part functioning as a rotor is located at an outer side of the motor fixation part.

4. The apparatus of claim 1, wherein the transmission part core and the reception part core of the wireless power part have a structure in which they are symmetrical with respect to each other, and comprise a transmission part coil and a reception part coil, respectively formed in a coil form in which a fixed quantity of coil is wound from an internal space,
wherein the transmission part coil is connected to the power connection line coming in through the through hole of the main shaft.

5. The apparatus of claim 1, wherein the reception part core of the wireless power part, and the rotary substrate of the optical communication part are combined with a rotation support member configured to transmit rotary force of the motor rotation part.

6. The apparatus of claim 5, wherein the rotation support member rotates while coming into contact with bearings furnished on at least one or more portions along an outer circumferential surface of the main shaft.

7. The apparatus of claim 1, wherein the optical communication part further has a light diffusion plate that consists of a light diffusion member in a round shape between the fixed substrate and the rotary substrate, and functions to uniformly propagate light transmitted and received from a luminous source through dispersion and diffusion actions.

8. The apparatus of claim 7, wherein the rotary communication element comprises a plurality of visible light transmission modules each consisting of a visible light diode, and one infrared (IR) reception module consisting of an infrared (IR) reception sensor, and
the fixed communication element comprises at least one or more infrared (IR) transmission modules each consisting of an infrared light diode, and one visible light reception module consisting of a visible light reception sensor.

9. The apparatus of claim 8, wherein the light diffusion plate further comprises an optical waveguide configured to transmit an optical signal between the rotary communication element and the fixed communication element.

10. A rotary drive light detection and ranging (LiDAR) system, with respect to the LiDAR system, which uses the contactless power supply and data communication apparatus of claim 1, comprising:
a main body housing consisting of an upper combination body, and a lower combination body;
a main shaft configured to connect and fix the upper combination body from the center while being supported by the lower combination body;
a motor configured to provide rotation power for rotating a rotary part centering around the main shaft;
a wireless power part consisting of a transmission part core united with and fixed to an outer circumferential surface of the main shaft, and a reception part core spaced apart from the transmission part core, and rotating from an upper end, thereby supplying and receiving power through electromagnetic induction;
an optical communication part configured to transmit and receive an optical signal by being configured in such a manner that a rotary communication element disposed on a lower surface of a rotary substrate rotating with the main shaft as its center, and a fixed communication element disposed on an upper surface of a fixed substrate which is fixed are spaced apart from each other at a fixed distance; and
a laser transmission and reception module consisting of a laser transmission unit configured to radiate a laser beam while rotating centering around the main shaft by receiving rotation power of the motor, and laser reception units configured to receive the laser beam returned by being reflected in a target,
wherein the laser transmission and reception module is circuit-connected to a reception part coil of the wireless power part, thereby carrying out laser transmission and reception operations by receiving power induced to the reception part coil, and catching hold of a distance between objects, and a shape by transmitting and receiving a signal or data through the optical communication part.
